(19) Europäisches Patentamt / European Patent Office / Office européen des brevets

(11) **EP 3 933 382 A1**

(12) **EUROPEAN PATENT APPLICATION**

(43) Date of publication:
05.01.2022 Bulletin 2022/01

(51) Int Cl.:
*G01N 21/15* (2006.01)

(21) Application number: 21182771.2

(22) Date of filing: 30.06.2021

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 02.07.2020 JP 2020115196

(71) Applicant: **YOKOGAWA ELECTRIC CORPORATION**
**Musashino-shi**
**Tokyo 180-8750 (JP)**

(72) Inventors:
• **SHIMIZU, Hikaru**
**Musashino-shi (JP)**
• **KUWAGATA, Takeshi**
**Musashino-shi (JP)**

(74) Representative: **Osha Liang**
**2, rue de la Paix**
**75002 Paris (FR)**

(54) **OPTICAL MEASURING DEVICE**

(57)　An optical measuring device (1) that measures one or more optical parameters indicating a state of a liquid, includes: a light source (24) that irradiates light to the liquid; a light receiver (25) that detects a measured light based on the light irradiated to the liquid; an optical component (26) that is disposed on an optical path between the light source (24) and the light receiver (25); and a heat source (28) disposed on the optical component (26) and that has optical transparency and electrical conductivity.

FIG. 3

# Description

## BACKGROUND

### Technical Field

The present invention generally relates to an optical measuring device.

### Related Art

Conventionally, art is known relating to an optical measuring device that optically measures parameters, such as turbidity and chromaticity, indicating a state of a measured liquid.

For example, patent literature 1 discloses a turbidimeter wherein a concentration of suspended solids in a measured liquid is wide, from a low region to a high region, and linearity is maintained by using the same cell length and detector disposition, thereby enabling accurate measurement.

### Patent Literature

Patent Literature 1: Japanese Patent Application Publication No. 2006-329629

In a conventional optical measuring device, depending on a temperature difference between a temperature in an operating environment and a temperature of a liquid, condensation may occur on an optical component constituting an optical system and cloud a surface of the optical component. When the surface of the optical component is clouded, light is attenuated independently of parameters of the liquid, making it difficult to obtain accurate parameter values. Therefore, measurement precision for parameters indicating a state of the liquid is reduced.

## SUMMARY

One or more embodiments provide an optical measuring device having improved measurement precision for optical parameters indicating a state of a liquid, such as, for example, turbidity and/or chromaticity.

According to one or more embodiments, an optical measuring device that measures an optical parameter indicating a state of a liquid, includes: a light source that irradiates an irradiated light to the liquid, a light receiver that detects a measured light based on the irradiated light irradiated to the liquid, an optical component that is disposed on an optical path between the light source and the light receiver, and a heat source that functions as a heater formed on the optical component and has optical transparency and electrical conductivity. For example, the optical component may have an optical transparency of... and an electrical conductivity of.... **[Please provide exemplary ranges. This may be helpful as a fallback position in case these terms are objected to for lack of clarity]**

According to one or more embodiments, it is possible to improve measurement precision for a parameter indicating the state of the measured liquid, for example as to the presence of suspended matters in the liquid. By having the heat source that functions as a heater formed on the optical component and has optical transparency and electrical conductivity, for example within the above-mentioned ranges, the optical measuring device can suppress cooling of the optical component by the measured liquid. This enables the optical measuring device to suppress condensation on the optical component and clouding of a surface of the optical component. Therefore, the attenuation of light including the irradiated light and the measured light independently of a parameter indicating the state of the measured liquid due to condensation and clouding is suppressed. As a result, the optical measuring device can accurately measure a parameter indicating the state of the measured liquid.

In one or more embodiments, the optical component may include a liquid tank configured to contain the liquid, in which the liquid may flow, and a glass disposed at a boundary of the liquid tank, and the heat source may include a film formed on a surface of the glass. This enables the optical measuring device to suppress condensation and surface clouding for the glass that is disposed at the boundary of the liquid tank wherein the measured liquid flows and is most likely to receive a cooling effect due to the measured liquid. Therefore, the irradiated light being attenuated independently of a parameter indicating the state of the measured liquid immediately before becoming incident on the measured liquid is suppressed. Likewise, the measured light being attenuated independently of a parameter indicating the state of the measured liquid immediately after emission from the measured liquid is suppressed.

In one or more embodiments, the glass may be formed in a T shape. This enables the optical measuring device to suppress adhesion of dirt on the glass. For example, by the glass being formed in a T shape and being flush with an inner side of the liquid tank, retention of the measured liquid is suppressed. This makes it less likely for dirt included in the measured liquid to remain. As a result, adhesion of the dirt included in the measured liquid on the glass is suppressed.

In one or more embodiments, the optical component may include a lens, and the heat source may include a film formed on a surface of the lens. This enables the optical measuring device to suppress condensation and surface clouding for the lens as well. For example, even if the lens is separated from the liquid tank wherein the measured liquid flows, if a distance from the liquid tank is short, there is also a possibility of receiving the cooling effect due to the measured liquid. By the above, the irradiated light being attenuated independently of a parameter indicating the state of the measured liquid at a lens disposed on a light source side is suppressed. Likewise, when a lens is also disposed on a light receiver side, the measured light being attenuated independently of a parameter indicating the state of the measured liquid at this lens is suppressed.

In one or more embodiments, the optical component may further include a liquid tank configured to contain the liquid, in which the liquid may flow, and the lens may be disposed at the boundary of the liquid tank, optionally separated from the liquid tank. Even in such a situation, by the film being formed on the surface of the lens, the optical measuring device exhibits effects similar to the above effects relating to the glass. Additionally, because the lens is disposed at the boundary of the liquid tank wherein the measured liquid flows, no additional lens needs to be disposed in the light source and the light receiver. This reduces a component count.

In one or more embodiments, the film may include an ITO film. This enables the optical measuring device to newly use an ITO film as a heater having optical transparency and electrical conductivity in an optical measurement system. ITO films are conventionally used in, for example, smartphone displays, automobile windshields, and window glass of railway vehicles to increase people's visibility. However, unlike such a conventional usage, in the optical measuring device according to one or more embodiments, an ITO film is formed on the optical component, which is disposed in an optical measurement system and requires high optical design precision. This can improve measurement precision in optical measurement.

In one or more embodiments, the optical component may include a first optical component disposed on the light source side and a second optical component disposed on the light receiver side, and the heat source may include a first heat source formed on the first optical component and a second heat source formed on the second optical component. This enables the optical measuring device to suppress cooling due to the measured liquid for each optical component. That is, the optical measuring device can suppress condensation and surface clouding for each optical component. Therefore, light including the irradiated light and the measured light being attenuated independently of a parameter indicating the state of the measured liquid due to condensation and clouding is more effectively suppressed. As a result, the optical measuring device can more accurately measure a parameter indicating the state of the measured liquid.

In one or more embodiments, the parameter may include a turbidity of the measured liquid. This enables the optical measuring device to measure the turbidity of the measured liquid as a turbidimeter.

In one or more embodiments, the parameter may include a chromaticity of the measured liquid. This enables the optical measuring device to measure the chromaticity of the measured liquid as a colorimeter.

One or more embodiments provide an improved optical measuring device that results in a precise measurement of parameters indicating a state of a measured liquid.

BRIEF DESCRIPTION OF THE DRAWINGS

FIG. 1 is a front view illustrating an appearance of an optical measuring device according to one or more embodiments.
FIG. 2 is a block diagram illustrating one example of a configuration of the optical measuring device in FIG. 1.
FIG. 3 is a schematic diagram illustrating one example of a cross section of the optical device in FIG. 1.
FIG. 4A is an enlarged front view schematically illustrating the portion IV enclosed in the dotted line in FIG. 3.
FIG. 4B is an enlarged side view schematically illustrating the portion IV enclosed in the dotted line in FIG. 3.
FIG. 5A is an enlarged front view, corresponding to FIG. 4A, schematically illustrating the lens positioned on the light source side in FIG. 3.
FIG. 5B is an enlarged side view, corresponding to FIG. 4B, schematically illustrating the lens positioned on the light source side in FIG. 3.
FIG. 6 is a schematic diagram, corresponding to FIG. 3, that illustrates a first variation of the optical measuring device according to one or more embodiments.
FIG. 7 is a schematic diagram, corresponding to FIG. 3, that illustrates a second variation of the optical measuring device according to one or more embodiments.
FIG. 8 is a schematic diagram, corresponding to FIG. 3, that illustrates a third variation of the optical measuring device according to one or more embodiments.

DETAILED DESCRIPTION

The background of the technologies applied to conventional optical measuring devices will be described in detail. For example, optical measuring devices may be turbidimeters.

Turbidity of a measured liquid measured by a turbidimeter is determined by a quantity of particles present in the measured liquid—that is, suspended substances. Several methods are known for measuring the quantity of the suspended substances. For example, a turbidimeter of a type that compares transmitted light versus scattered light uses absorption and scattering of irradiated light by the suspended substances in the measured liquid. When the irradiated light is irradiated to the measured liquid including the suspended substances, due to absorption by the particles, transmitted light becomes weaker the greater a turbidity is. Meanwhile, due to scattering by the particles, scattered light becomes stronger the greater the turbidity is.

A light intensity of transmitted light changes logarithmically according to the Lambert-Beer law. As such, transmitted light becomes very weak at high turbidities.

It is therefore difficult to measure a measured liquid of a high turbidity using transmitted light alone. Theoretically, scattered light is proportional to turbidity. However, in actual measurement, scattered light is affected by absorption in a measured liquid of a high turbidity. Therefore, a detection-signal intensity for scattered light is not proportional to turbidity. As such, in a turbidimeter of the type that compares transmitted light versus scattered light, a value is used wherein a detection-signal intensity of scattered light is divided by a detection-signal intensity of transmitted light, and a monotonic increasing relationship is formed between a detection-signal value and a turbidity value.

A conventional turbidimeter has, for example, a lamp light source, a condensing lens, a liquid tank, a transmitted-light detector that detects transmitted light, and a scattered-light detector that detects scattered light. A white light irradiated from the lamp light source is turned into parallel light by the condensing lens. The white light turned into parallel light becomes incident on the liquid tank. Both ends of the liquid tank are partitioned by transparent glass. A portion of the parallel light is scattered by suspended substances of a measured liquid that, for example, flows in the liquid tank in one direction. The scattered light is detected by the scattered-light detector, which is disposed in a stage subsequent to the liquid tank. The transmitted light that is transmitted without being scattered is detected by the transmitted-light detector, which is likewise disposed in a stage subsequent to the liquid tank. A turbidity N of the measured liquid is sought by calculating according to formula 1 below using a computation circuit or the like based on a detection-signal intensity of the transmitted light and a detection-signal intensity of the scattered light that are detected.

[Math. 1]

$$\frac{I_s}{I_T} = \frac{I_s(0)}{I_T(0)} + cLN \qquad \text{(Formula 1)}$$

Here, $I_T$ indicates the detection-signal intensity of the transmitted light transmitted through the measured liquid, and Is indicates the detection-signal intensity of the scattered light scattered by the measured liquid. $I_T(0)$ indicates a detection-signal intensity of transmitted light transmitted through a liquid of a turbidity of 0, and $I_S(0)$ indicates a detection-signal intensity of scattered light scattered by a liquid of a turbidity of 0. c is a constant established according to the suspended substances in the measured liquid and a shape and characteristics of a detector. L is an optical path length of the liquid tank that is measured. As indicated in formula 1, the ratio $I_S/I_T$ changes in a linear function relative to the turbidity N.

In a conventional turbidimeter, depending on a temperature difference between a temperature in an operating environment and a temperature of a measured liquid, condensation may occur on an optical component constituting an optical system and cloud a surface of the optical component. When the surface of the optical component is clouded, light including irradiated light, transmitted light, and scattered light is attenuated independently of a turbidity of the measured liquid, making it difficult to obtain an accurate turbidity indicator value. Therefore, a measurement precision of a turbidity indicating a state of the measured liquid is reduced.

As measures for suppressing such condensation, conventionally, several methods are conceived. The first is a method of placing a desiccant inside a detector or the like constituting the turbidimeter. The second is a method of disposing a dehumidifying device inside a detector or the like constituting the turbidimeter. The third is a method of blowing dry air onto the surface of the optical component. The fourth is a method of indirectly warming the optical component using a hot-wire heater wrapped around a holder or the like of the optical component.

However, in the first method, the desiccant needs to be periodically replaced, increasing maintenance costs. In the second and third methods, there are increased initial costs due to devices for combatting condensation. Additionally, an overall configuration of a detector or the like becomes complex, increasing maintenance person-hours, malfunction risk, and the like that accompany an increase in limited-lifetime components.

In the fourth method, temperature unevenness on the optical component may be caused. Additionally, because the optical component is being warmed indirectly, heat loss occurs while heat is being transmitted from the hot-wire heater to the holder and from the holder to the optical component. This decreases an efficiency of heat generation in the optical component by the hot-wire heater. Therefore, because an output of the hot-wire heater needs to be raised to extremes, a temperature of the hot-wire heater may increase significantly. Attempting to avoid a significant increase in the temperature of the hot-wire heater limits the turbidimeter to operations within a temperature range wherein condensation occurs infrequently. This reduces a usability of the conventional turbidimeter.

The above cost increase, malfunction risk, and temperature unevenness may occur in optical measuring devices similar to turbidity-based devices. An optical measuring device according to one or more embodiments can improve measurement precision for parameters indicating a state of a measured liquid. Additionally, according to one or more embodiments, an optical measuring device can reduce maintenance costs and initial costs by a simple structure and also reduces maintenance person-hours, malfunction risk, and the like. Furthermore, according to one or more embodiments, an optical measuring device has a condensation suppression function that is more long-term than a desiccant and can suppress temperature unevenness and a significant increase in heater temperature.

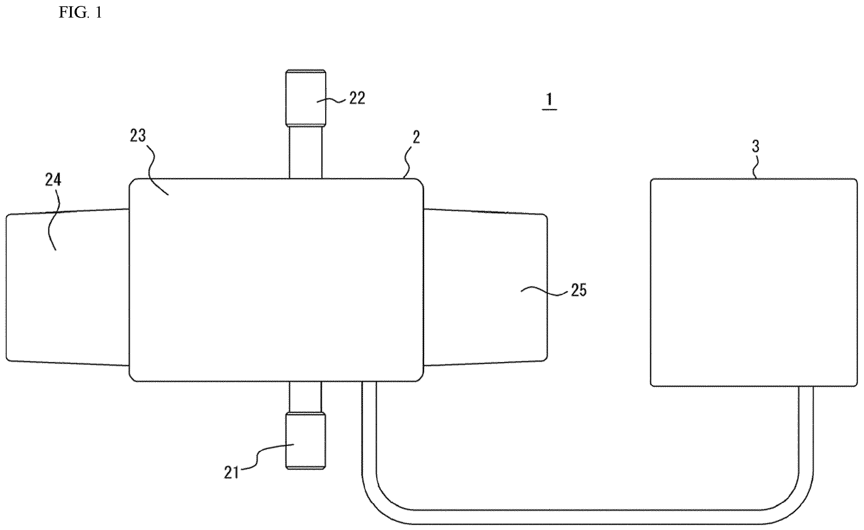

Embodiments of the present invention will be described below with reference to the drawings. FIG. 1 is a front view illustrating an appearance of an optical measuring device 1 according to one or more embodiments.

The optical measuring device 1 measures a parameter indicating a state of a measured liquid. In one or more embodiments, "parameters indicating a state of a measured liquid" include, for example, a turbidity and chromaticity of the measured liquid. Hereinbelow, the parameter is described as being turbidity, and the optical measuring device 1 is described as being a turbidimeter. However, the present disclosure is not limited thereto, and the following description likewise applies to a situation wherein the parameter is chromaticity, either alone or in combination with turbidity, and the optical measuring device 1 is a colorimeter or a turbidimeter/colorimeter, respectively.

The optical measuring device 1 according to one or more embodiments is, as one example, a turbidimeter of a type that compares transmitted light versus scattered light. The optical measuring device 1 measures a turbidity of the measured liquid. The optical measuring device 1 has, as major components, an optical device 2 and a processing device 3.

The optical device 2 irradiates an irradiated light L to the measured liquid, which passes therethrough, and detects a transmitted light T and a scattered light S that are based on the irradiated light L. The optical device 2 has a measured-liquid inlet 21 whereinto the measured liquid, which flows from below in FIG. 1, flows, and a measured-liquid outlet 22 wherefrom the measured liquid that flows into the optical device 2 from the measured-liquid inlet 21 flows out. The optical device 2 has a main-body unit 23, a light source 24, and a light receiver 25. Included inside the main-body unit 23 is a liquid tank 27, described below, that guides the measured liquid, which flows from below to above. The liquid tank 27 of the main-body unit 23 is interposed by the light source 24 and the light receiver 25 in a direction intersecting the direction wherein the measured liquid flows. The liquid tank 27 may also be provided with a drain port for drainage in addition to the measured-liquid inlet 21 and the measured-liquid outlet 22.

The processing device 3 is connected to the optical device 2 and acquires from the optical device 2 a detection signal based on the transmitted light T and the scattered light S detected by the optical device 2. The processing device 3 executes, for example, a process of calculating the turbidity of the measured liquid based on the detection signal acquired from the optical device 2 and a process of controlling the optical device 2.

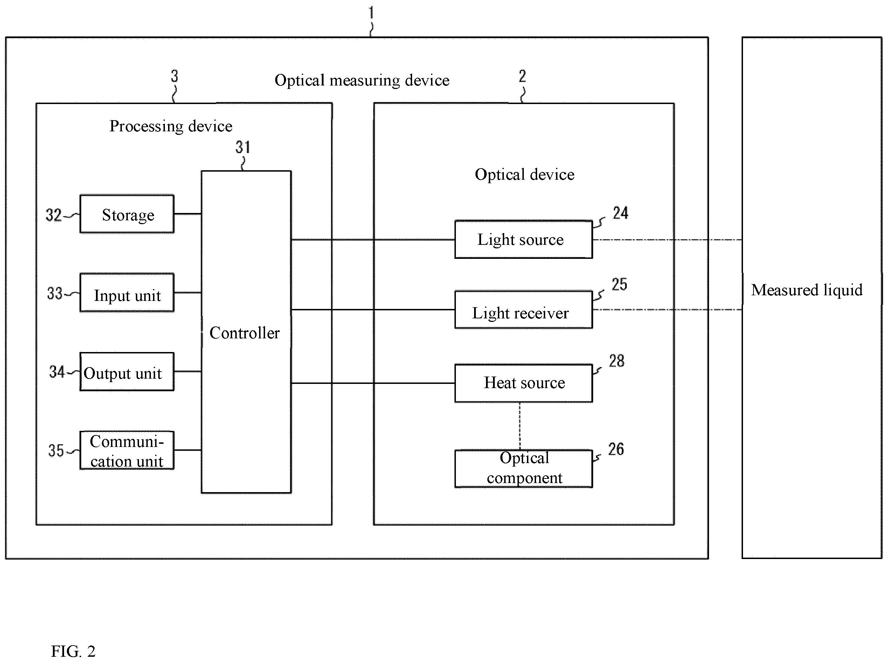

FIG. 2 is a block diagram illustrating one example of a configuration of the optical measuring device 1 in FIG. 1. The configuration of the optical measuring device 1 in FIG. 1 is mainly described with reference to FIG. 2.

In addition to the light source 24 and the light receiver 25 above, the optical device 2 included in the optical measuring device 1 further has, for example, an optical component 26 and heat source 28 inside the main-body unit 23 in FIG. 1.

The light source 24 irradiates the irradiated light L to the measured liquid that flows through the liquid tank 27 inside the main-body unit 23. A wavelength band of the irradiated light L is included in at least one among the visible region and the near-infrared region. The light source 24 has any light source that can irradiate the irradiated light L. For example, the light source 24 has an LED (light-emitting diode), an LD (laser diode), or the like. In one or more embodiments, "visible region" includes a wavelength region of light that is, for example, no less than 400 nm and less than 800 nm. In one or more embodiments, "near-infrared region" includes a wavelength region of light that is, for example, no less than 800 nm and no greater than 1,100 nm. The irradiated light L may be, for example, a monochromatic light of 860 nm or 660 nm or a wideband light of no less than 400 nm and no greater than 700 nm.

The light receiver 25 detects a measured light ML based on the irradiated light L irradiated to the measured liquid. The light receiver 25 outputs a detection current or a detection voltage as a detection signal of the measured light ML. An intensity of the output detection signal corresponds to a light intensity of the measured light ML detected by the light receiver 25. When the optical measuring device 1 is of the type that compares transmitted light versus scattered light, the measured light ML includes the transmitted light T, which is transmitted through the measured liquid, and the scattered light S, which is scattered by the measured liquid. In correspondence therewith, the light receiver 25 has a transmitted-light detector 251 and a scattered-light detector 252.

The transmitted-light detector 251 detects the transmitted light T that is based on the irradiated light L irradiated by the light source 24. The transmitted-light detector 251 has any photodetector that can detect such a transmitted light T. For example, the transmitted-light detector 251 has a photodiode. A wavelength band of a photodiode constituting the transmitted-light detector 251 includes a wavelength band of an optical spectrum had by the transmitted light T.

The scattered-light detector 252 detects the scattered light S that is based on the irradiated light L irradiated by the light source 24. The scattered-light detector 252 has any photodetector that can detect such a scattered light S. For example, the scattered-light detector 252 has a photodiode. A wavelength band of a photodiode constituting the scattered-light detector 252 includes a wavelength band of an optical spectrum had by the scattered light S.

The optical component 26 is disposed on an optical path between the light source 24 and the light receiver 25. The optical component 26 includes, for example, a lens 261 and glass 262. The lens 261 includes, for example, a condensing lens that turns the irradiated light L irradiated from the light source 24 into parallel light before incidence on the measured liquid. The glass 262 includes, for example, transparent glass disposed at a boundary of the liquid tank 27 wherein the measured liquid flows.

The heat source 28 functions as a heater formed on the optical component 26 and has optical transparency and electrical conductivity. For example, the heat source 28 includes a film 281 formed on a surface of the optical component 26. For example, the film 281 includes an indium tin oxide (ITO) film. Additionally, the heat source 28 includes wiring 282 for supplying power to the film 281 and other electrical-circuit components such as a power source.

The processing device 3 has a controller 31, a storage 32, an input unit 33, an output unit 34, and a communication unit 35.

The controller 31 includes one or more processors. In one or more embodiments, "processor" is a general-purpose processor or a dedicated processor specialized for a specific process but is not limited thereto. For example, the controller 31 includes a processor that can execute a process relating to the optical measuring device 1. The controller 31 is connected to each constituent part constituting the optical measuring device 1 and controls and manages these constituent parts as well as the optical measuring device 1 overall.

For example, the controller 31 controls a drive current of an LED light source included in the light source 24. For example, the controller 31 calculates the turbidity of the measured liquid based on the detection signal of the measured light ML output from the light receiver 25. For example, the controller 31 supplies power to the film 281 and controls the heat source 28 so the heat source 28 functions as a heater formed on the optical component 26.

The storage 32 includes any storage module, including an HDD (hard disk drive), an SSD (solid-state drive), an EEPROM (electrically erasable programmable read-only memory), a ROM (read-only memory), and a RAM (random-access memory). The storage 32 may function as, for example, a main storage device, an auxiliary storage device, or a cache memory. The storage 32 stores any information necessary to realize operations of the optical measuring device 1. For example, the storage 32 may store a system program, an application program, various information received by the communication unit 35, and the like.

The storage 32 is not limited to being built into the optical measuring device 1 and may also be an external database, connected by, for example, a USB (universal serial bus) or other digital input/output port, or an external storage module. The storage 32 stores, for example, various information calculated by the controller 31. The storage 32 stores, for example, detection information based on the detection signal of the measured light ML output from the optical device 2.

The input unit 33 includes one or more input interfaces that accept an input operation by a user of the optical measuring device 1 and acquire input information based on a user operation. For example, the input unit 33 includes a physical key, a capacitive key, a touchscreen provided integrally with a display of the output unit 34, a microphone that accepts audio input, and the like but is not limited thereto.

The output unit 34 includes one or more output interfaces that output information to the user. For example, the output unit 34 is a display that outputs information as an image, a speaker that outputs information as audio, or the like but is not limited thereto. The output unit 34 performs, for example, display of the various information calculated by the controller 31 to the user of the optical measuring device 1. The output unit 34 performs, for example, display, to the user, of a settings screen necessary for the user to input any information for realizing the operations of the optical measuring device 1.

The communication unit 35 includes any communication interface compatible with any wired or wireless communication protocol. The communication unit 35 may transmit the various information calculated by the controller 31 to any external device. The communication unit 35 may receive from any external device any information necessary to realize the operations of the optical measuring device 1. For example, the communication unit 35 may receive from any external device a control signal for controlling the optical device 2.

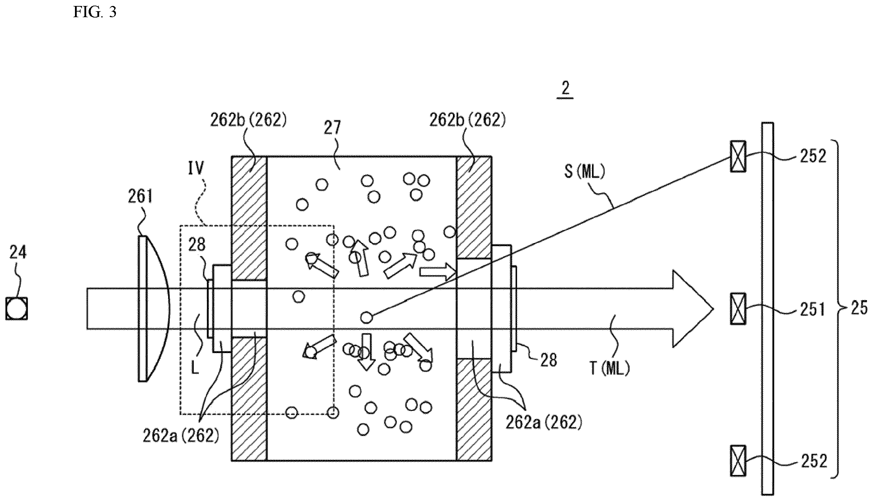

FIG. 3 is a schematic diagram illustrating one example of a cross section of the optical device 2 in FIG. 1. Operations relating to an optical system of the optical measuring device 1 are mainly described with reference to FIG. 3.

The irradiated light L irradiated by the light source 24 is turned into parallel light by the lens 261. The irradiated light L turned into parallel light is transmitted through the glass 262, on whose surface the heat source 28 is formed, and becomes incident on the liquid tank 27. Both ends of the liquid tank 27 are partitioned by the glass 262, which is serving as transparent glass. In the liquid tank 27, the measured liquid is flowing, for example, from below to above in FIG. 3. The light receiver 25 is disposed on an opposite side of the light source 24, the liquid tank 27 being interposed therebetween.

The transmitted light T that is transmitted through the measured liquid in the liquid tank 27 is transmitted through the glass 262, on whose surface the heat source 28 is formed, and is detected by the transmitted-light detector 251, which is disposed, for example, so as to oppose the light source 24, the liquid tank 27 being interposed therebetween. Of the scattered light S scattered by suspended substances of the measured liquid flowing in the liquid tank 27, scattered light S imparted with a predetermined angle relative to the transmitted light T, which is a parallel beam, is detected by the scattered-light detector 252, which is disposed, for example, above and below the transmitted-light detector 251. A number of photodetectors constituting the scattered-light detector 252 is not limited to two and may be one or three or more. Based on a detection-signal intensity $I_T$ of the transmitted light T and detection-signal intensity $I_S$ of the scattered light S detected by the light receiver 25, the controller 31 calculates a turbidity N by performing a ratio computation of $I_S/I_T$.

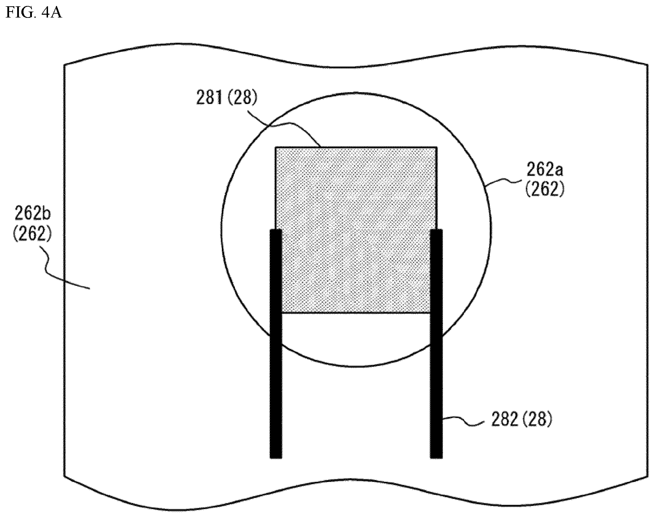

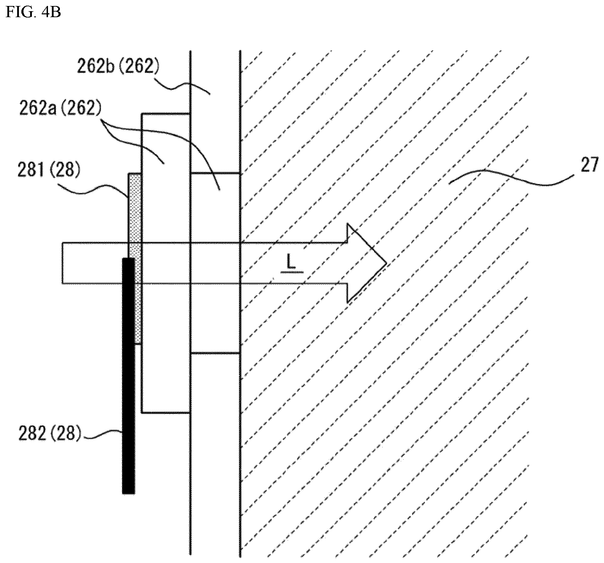

FIG. 4A is an enlarged front view schematically illustrating the portion IV enclosed in the dotted line in FIG. 3. FIG. 4B is an enlarged side view schematically illustrating the portion IV enclosed in the dotted line in FIG. 3. Configurations and functions of the glass 262 and the heat source 28 are mainly described with reference to FIGS. 4A and 4B. The following description using FIGS. 4A and 4B likewise applies to the light receiver 25 side in FIG. 3.

As illustrated in FIG. 4B, the glass 262 is disposed at a boundary of the liquid tank 27 wherein the measured liquid flows. The glass 262 also functions as an optical window and includes first glass 262a, wherethrough the irradiated light L irradiated by the light source 24 is transmitted, and second glass 262b, which constitutes a remaining portion of the boundary of the liquid tank 27. Although the second glass 262b is illustrated as one example in FIG. 4B, the remaining portion of the boundary of the liquid tank 27 may be constituted by a resin or a metal instead of the second glass 262b. The first glass 262a and the second glass 262b are installed by a seal structure including a gasket, an O-ring, and the like so the measured liquid does not leak. Not being limited thereto, the first glass 262a and the second glass 262b may be welded together. In a side view such as that illustrated in FIG. 4B, the first glass 262a is formed in a T shape. The film 281 of the heat source 28 is formed on a surface of the first glass 262a. For example, the film 281 is formed on an upper side of the "T" formed by the first glass 262a.

The film 281 has optical transparency for the irradiated light L irradiated from the light source 24. For example, the optical transparency of the film 281 becomes greater the thinner a film thickness of the film 281 is. For example, a transmittance of the irradiated light L becomes higher the thinner the film thickness of the film 281 is. Conversely, the transmittance of the irradiated light L becomes lower the thicker the film thickness of the film 281 is.

Additionally, the film 281 has electrical conductivity and generates heat by the power supplied from the wiring 282 installed to the film 281. That is, the film 281 functions as a heater formed on the first glass 262a.

For example, by the first glass 262a being cooled by a low-temperature measured liquid and an air temperature decreasing near the first glass 262a, an amount of saturated water vapor in the air decreases. At this time, if the first glass 262a is not treated in any way, condensation occurs on the first glass 262a, clouding the surface of the first glass 262a. Therefore, to suppress such condensation, the controller 31 controls the heat source 28 so as to, for example, continually supply power to the film 281 via the wiring 282.

At this time, a heat generation amount in the film 281 changes based on a resistance value of the film 281. For example, when a voltage in the film 281 is constant, the heat generation amount in the film 281 becomes lower the higher the resistance value of the film 281 is. That is, when the voltage in the film 281 is constant, the heat generation amount in the film 281 becomes lower the thinner the film thickness of the film 281 is. Conversely, when the voltage in the film 281 is constant, the heat generation amount in the film 281 becomes higher the lower the resistance value of the film 281 is. That is, when the voltage in the film 281 is constant, the heat generation amount in the film 281 becomes higher the thicker the film thickness of the film 281 is.

The film 281 is formed in a predetermined film thickness due to functions such as the above relating to optical transparency and electrical conductivity. In one or more embodiments, "predetermined film thickness" includes, for example, any film thickness that realizes an optical transparency that enables maintenance of a light intensity necessary to measure a parameter indicating the state of the measured liquid and enables realization of an electrical conductivity that enables maintenance of a heat generation amount necessary to suppress condensation on the optical component 26. That is, the film thickness of the film 281 is determined so as to be any optimal value that balances optical transparency and electrical conductivity.

When the film 281 is formed in the predetermined film thickness, if a current flowing through the film 281 is constant, the heat generation amount in the film 281 is also constant. At this time, the heat generation amount in the film 281 changes based on a current value of the current flowing through the film 281. For example, the heat generation amount in the film 281 becomes higher the higher the current value of the current flowing through the film 281 is. Conversely, the heat generation amount in the film 281 becomes lower the lower the current value of the current flowing through the film 281 is.

Therefore, the controller 31 controls the heat source 28 so a current having a predetermined current value constantly flows through the film 281. In one or more embodiments, "predetermined current value" includes, for example, any value that does not cause the heat generation amount of the film 281 to become excessively high and enables maintenance of a heat generation amount that can sufficiently suppress condensation on the optical component 26.

In FIG. 3, the optical component 26 whereon the heat source 28 is formed includes the glass 262, which is positioned on a light source 24 side and the light receiver 25 side. However, the above description relating to the configurations and functions of the optical component 26 and the heat source 28 likewise applies to another optical component 26 positioned on the light source 24 side or the light receiver 25 side. For example, the film 281 may be formed on a surface of the lens 261 in FIG. 3. For example, the film 281 may be formed only on the surface of glass 262 positioned on one among the light source 24 side and the light receiver 25 side in FIG. 3. That is, the heat source 28 may be formed only on an optical component 26 disposed on one among the light source 24 side and the light receiver 25 side.

In FIG. 4A and FIG. 4B, the optical component 26 disposed at the boundary of the liquid tank 27 wherein the measured liquid flows is described as the glass 262 but is not limited thereto. For example, the lens 261 may be disposed instead of the first glass 262a in a portion that is the boundary of the liquid tank 27 wherein the measured liquid flows and is positioned on an optical path of the irradiated light L.

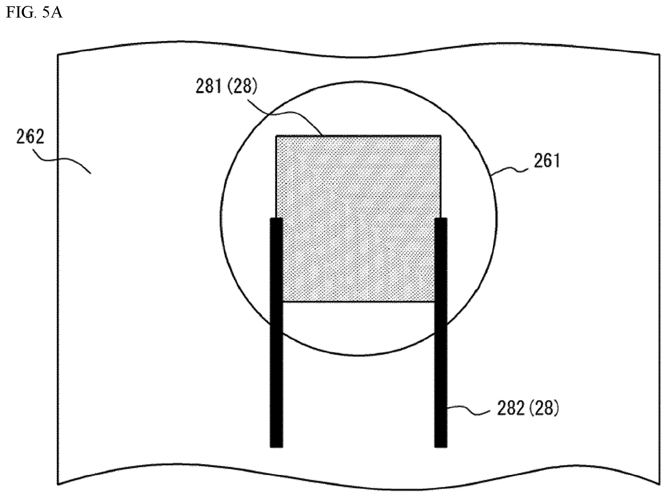

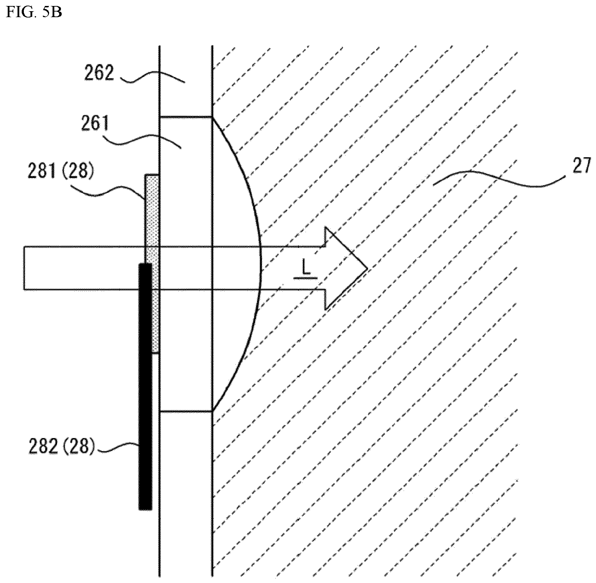

FIG. 5A is an enlarged front view, corresponding to FIG. 4A, schematically illustrating the lens 261 positioned on the light source 24 side in FIG. 3. FIG. 5B is an enlarged side view, corresponding to FIG. 4B, schematically illustrating the lens 261 positioned on the light source 24 side in FIG. 3. Configurations and functions of the lens 261 and the heat source 28 are mainly described with reference to FIGS. 5A and 5B.

As illustrated in FIG. 5B, the lens 261 may be disposed at the boundary of the liquid tank 27 wherein the measured liquid flows. Although the glass 262 is illustrated as one example in FIG. 5B, a remaining portion of the boundary of the liquid tank 27 may be constituted by a resin or a metal instead of the glass 262. The lens 261 and the glass 262 are installed by a seal structure including a gasket, an O-ring, and the like so the measured liquid does not leak. Not being limited thereto, the lens 261 and the glass 262 may be welded together. The film 281 of the heat source 28 is formed on the surface of the lens 261. For example, the film 281 is formed on an optical face, among a pair of optical faces of the lens 261, that is exposed to the light source 24 side.

The other content above relating to the configurations and functions of the optical component 26 and the heat source 28 described using FIG. 4A and FIG. 4B likewise apply to the lens 261 illustrated in FIG. 5A and FIG. 5B. Therefore, description similar to the other content above is omitted for FIG. 5A and FIG. 5B.

According to an optical measuring device 1 such as above, a measurement precision for parameters indicating the state of the measured liquid improves. By having the heat source 28 that functions as a heater formed on the optical component 26 and has optical transparency and electrical conductivity, the optical measuring device 1 can suppress cooling of the optical component 26 by the measured liquid. This enables the optical measuring device 1 to suppress condensation on the optical component 26 and clouding of the surface of the optical component 26. Therefore, light including the irradiated light L, the transmitted light T, and the scattered light S being attenuated independently of the parameters indicating the state of the measured liquid due to condensation and clouding is suppressed. As a result, the optical measuring device 1 can accurately measure the parameters indicating the state of the measured liquid.

In the optical measuring device 1, because the heat source 28 is formed on the optical component 26 so as to function as a heater, there is no need to separately dispose a desiccant, a dehumidifying device, or the like as in the prior art. This reduces maintenance costs and initial costs by a simple structure. Due to its simple structure, maintenance person-hours, malfunction risk, and the like are reduced in the optical measuring device 1. For example, because the optical measuring device 1 forms the heat source 28 on the optical component 26, even if a malfunction occurs due to an unexpected situation, the optical measuring device 1 can easily recover from the malfunction simply by a replacement of the heat source 28 together with the optical component 26.

In the optical measuring device 1, in contrast to, for example, prior art that uses a hot-wire heater, the heat source 28 directly warms the optical component 26. As such, temperature unevenness on the optical component 26 is suppressed. Additionally, because the heat source 28 is directly warming the optical component 26, there is no need to raise an output of the heat source 28 to extremes, and a sufficiently low power consumption can provide a similar heat generation effect. Therefore, by using the heat source 28, the optical measuring device 1 can even achieve, without extremely high power consumption, a heat generation amount that is difficult for the prior art using a hot-wire heater to obtain. That is, the optical measuring device 1 can make heat generation in the optical component 26 by a heater more efficient than the prior art and can more effectively suppress cooling of the optical component 26 due to the measured liquid. As a result, unlike the prior art, the optical measuring device 1 is not limited to operations within a temperature range wherein condensation occurs infrequently. This can improve a usability thereof.

By the heat source 28 including the film 281 formed on the surface of the glass 262, the optical measuring device 1 can suppress condensation and surface clouding for the glass 262, which is disposed at the boundary of the liquid tank 27 wherein the measured liquid flows and is most likely to receive a cooling effect due to the measured liquid. Therefore, the irradiated light L being attenuated independently of the parameters indicating the state of the measured liquid immediately before becoming incident on the measured liquid is suppressed. Likewise, the transmitted light T and the scattered light S being attenuated independently of the parameters indicating the state of the measured liquid immediately after emission from the measured liquid is suppressed.

Because the glass 262 is formed in the T shape, the optical measuring device 1 can suppress adhesion of dirt on the glass 262. For example, as illustrated in FIG. 4B, by the first glass 262a being formed in the T shape and the first glass 262a and the second glass 262b being flush with an inner side of the liquid tank 27, retention of the measured liquid is suppressed. This makes it less likely for dirt included in the measured liquid to remain. As a result, adhesion of the dirt included in the measured liquid on the first glass 262a is suppressed.

By the heat source 28 including the film 281 formed on the surface of the lens 261, the optical measuring device 1 can also suppress condensation and surface clouding for the lens 261. For example, even if the lens 261 is separated from the liquid tank 27 wherein the measured liquid flows, if a distance from the liquid tank 27 is short, there is also a possibility of receiving the cooling effect due to the measured liquid. By the above, the irradiated light L being attenuated independently of the parameters indicating the state of the measured liquid at the lens 261 disposed on the light source 24 side is suppressed. Likewise, when the lens 261 is also disposed on the light receiver 25 side, the transmitted light T and the scattered light S being attenuated independently of the parameters indicating the state of the measured liquid at this lens 261 is suppressed.

In the optical measuring device 1, even when the lens 261 is disposed at the boundary of the liquid tank 27 wherein the measured liquid flows, because the film 281 is formed on the surface of such a lens 261, effects similar to the above effects relating to the glass 262 are exhibited. Additionally, because the lens 261 is disposed at the boundary of the liquid tank 27 wherein the measured liquid flows, no additional lens 261 needs to be disposed in the light source 24 and the light receiver 25. This reduces a component count.

By the film 281 including an ITO film, the optical measuring device 1 can newly use an ITO film as a heater having optical transparency and electrical conductivity in an optical measurement system. ITO films are conventionally used in, for example, smartphone displays, automobile windshields, and window glass of railway vehicles to increase people's visibility. However, unlike such a conventional usage, in the optical measuring device 1 according to one or more embodiments, an ITO film is formed on the optical component 26, which is disposed in an optical measurement system and requires high optical design precision. This can improve measurement precision in optical measurement.

Unlike a conventional target of ITO film formation, the optical component 26 of the optical measuring device 1 that is to have an ITO film formed thereon has a very small area of film formation. Therefore, when forming an ITO film on the optical component 26, there is no need to use a large film formation device. Meanwhile, if a film formation device of a predetermined size is used, ITO films can be formed at once on a large number of optical components 26 in one film formation step. Therefore, a step of forming an ITO film on the optical component 26 can be performed easily and efficiently.

By the heat source 28 being formed for each optical component 26, these being disposed on both the light source 24 side and the light receiver 25 side, the optical measuring device 1 can suppress cooling due to the measured liquid for each optical component 26. This enables the optical measuring device 1 to suppress condensation and surface clouding for each optical component 26. Therefore, light including the irradiated light L, the transmitted light T, and the scattered light S being attenuated independently of the parameters indicating the state of the measured liquid due to condensation and clouding is more effectively suppressed. As a result, the optical measuring device 1 can more accurately measure the parameters indicating the state of the measured liquid.

By the parameters indicating the state of the measured liquid including the turbidity of the measured liquid, the optical measuring device 1 can measure the turbidity of the measured liquid as a turbidimeter.

By the film 281 being formed at the predetermined film thickness, the optical measuring device 1 can obtain a sufficient heat generation amount in the optical component 26 necessary to maintain measurement precision while keeping a reduction in light transmittance due to film formation to a necessary minimum.

Although the disclosure has been described with respect to only a limited number of embodiments, those skilled in the art, having benefit of this disclosure, will appreciate that various other embodiments may be devised without departing from the scope of the present invention. Accordingly, the scope of the invention should be limited only by the attached claims.

For example, shapes, placements, orientations, numbers, and the like of the above constituent parts are not limited to the above description and the content illustrated in the drawings. The shapes, placements, orientations, numbers, and the like of the constituent parts may be configured in any manner as long as the functions thereof can be realized.

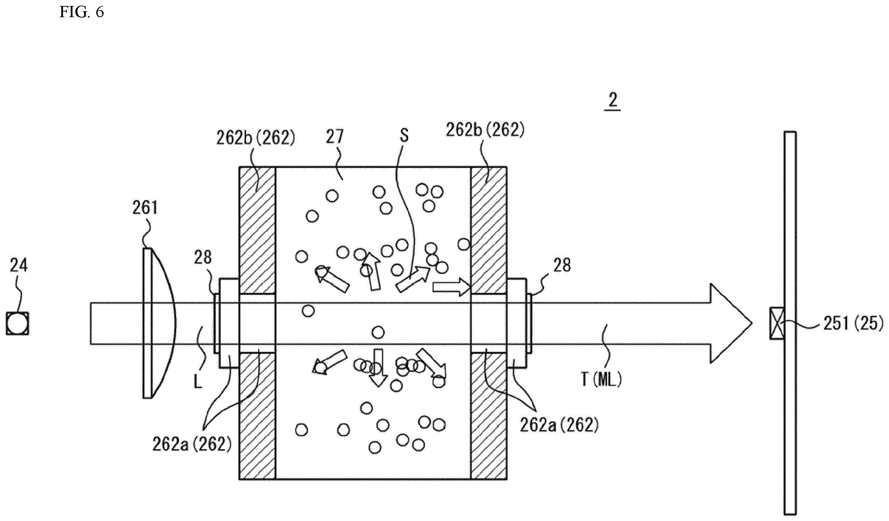

In the above, it is described that the optical measuring device 1 is a turbidimeter of the type that compares transmitted light versus scattered light such as that illustrated in FIG. 3. However, the present disclosure is not limited thereto. FIG. 6 is a schematic diagram, corresponding to FIG. 3, that illustrates a first variation of the optical measuring device 1 according to one or more embodiments. As illustrated in FIG. 6, the optical measuring device 1 may be a turbidimeter of a type that uses transmitted light that measures turbidity using absorbance alone. At this time, the heat source 28 may be formed, for example, on first glass 262a positioned respectively on the light source 24 side and a transmitted-light detector 251 side. For the remaining configurations, content similar to the description given above using FIG. 3, FIG. 4A, and FIG. 4B applies.

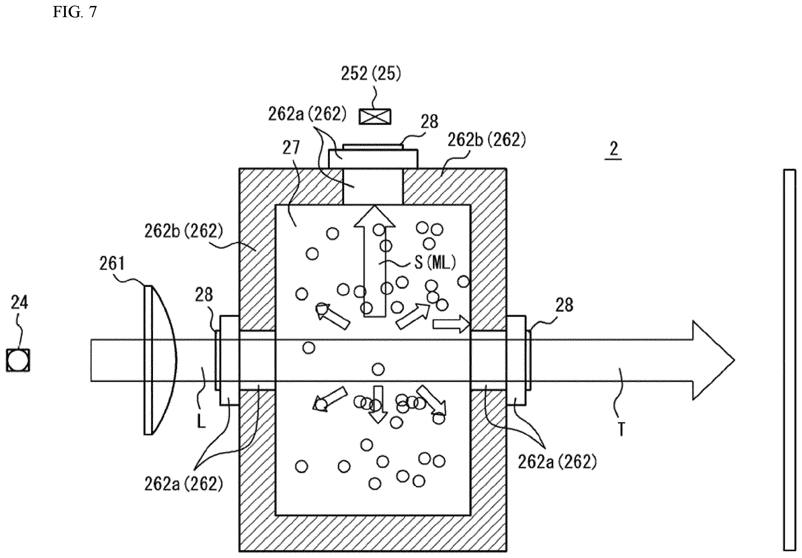

FIG. 7 is a schematic diagram, corresponding to FIG. 3, that illustrates a second variation of the optical measuring device 1 according to one or more embodiments. As illustrated in FIG. 7, the optical measuring device 1 may be a turbidimeter of a type that uses scattered light. The measured liquid flows in a direction orthogonal to the surface of the page. At this time, the heat source 28 may be formed, for example, on both first glass 262a positioned on the light source 24 side and first glass 262a positioned on a scattered-light detector 252 side. This suppresses the irradiated light L and the scattered light S being attenuated independently of the parameters indicating the state of the measured liquid due to condensation and clouding. Alternatively, the heat source 28 may be formed, for example, on one among glass 262 positioned on the light source 24 side and glass 262 positioned on the scattered-light-detection-unit 252 side. The heat source 28 may also be formed on first glass 262a wherethrough the transmitted light T is transmitted. Note that an optical component 26 positioned on the scattered-light-detection-unit 252 side may be the lens 261 instead of the glass 262. For the remaining configurations, content similar to the description given above using FIG. 3, FIG. 4A, and FIG. 4B applies.

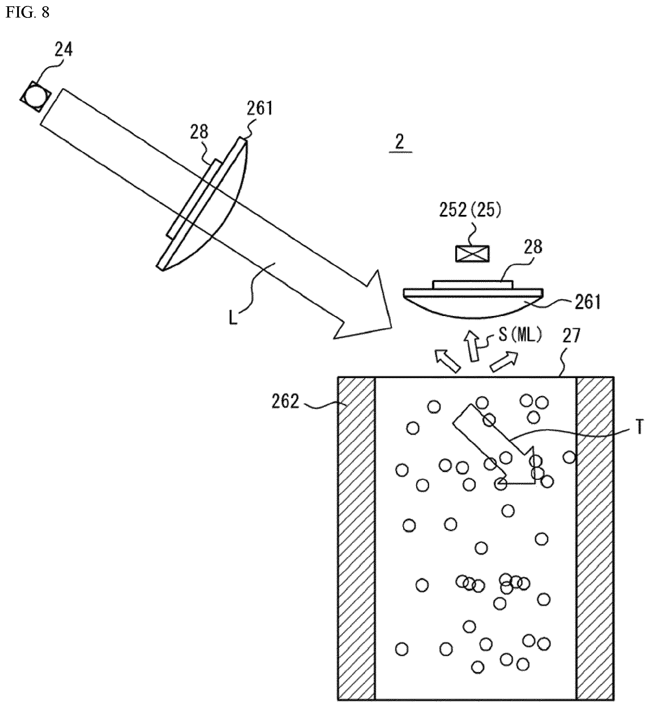

FIG. 8 is a schematic diagram, corresponding to FIG. 3, that illustrates a third variation of the optical measuring device 1 according to one or more embodiments. As illustrated in FIG. 8, the optical measuring device 1 may be a turbidimeter of a type that uses surface-scattered light. At this time, for example, a lens 261 positioned on a light source 24 side in FIG. 8 and a lens 261 positioned on a scattered-light-detection-unit 252 side in FIG. 8 may be clouded due to vapor from the measured liquid, depending on a relationship between a temperature in an operating environment and a temperature of the measured liquid. In the optical measuring device 1 according to one or more embodiments, even in such a situation, because the film 281 is formed on respective surfaces of the lens 261 positioned on the light source 24 side and the lens 261 positioned on the scattered-light-detection-unit 252 side, clouding of the surface of the lens 261 can be suppressed, and the measurement precision for the parameters indicating the state of the measured liquid can be improved.

Note that the heat source 28 in the third variation may, as in the above description relating to one or more embodiments other than the third variation, be formed on one among the lens 261 positioned on the light source 24 side and the lens 261 positioned on the scattered-light-detection-unit 252 side.

As described above, in one or more embodiments, it is described that the film 281 is formed on the surface of the optical component 26. However, the present disclosure is not limited thereto. The heat source 28 may be formed on the optical component 26 in any aspect of having optical transparency and electrical conductivity and functioning as a heater. For example, a configuration corresponding to the film 281 of the heat source 28 may be integrally formed in a state of being embedded in the optical component 26.

As described above, in one or more embodiments, it is described that the optical component 26 includes the lens 261 and the glass 262. However, the present disclosure is not limited thereto. The optical component 26 may include any other optical element disposed in a position that receives the cooling effect due to the measured liquid.

As described above, in one or more embodiments, it is described that the glass 262 includes transparent glass disposed at the boundary of the liquid tank 27 wherein the measured liquid flows. However, the present disclosure is not limited thereto. The glass 262 may include any other glass instead of transparent glass. The glass 262 is not limited to being disposed at the boundary of the liquid tank 27 wherein the measured liquid flows and may include any other glass disposed in a position that receives the cooling effect due to the measured liquid.

As described above, in one or more embodiments, it is described that the glass 262 is formed in a T shape. However, the present disclosure is not limited thereto. The glass 262 may be formed in any shape. For example, it may be formed in a tabular shape. For example, when the boundary of the liquid tank 27 is constituted by a single glass 262, the film 281 may be formed on a portion or an entirety of this glass 262.

As described above, in one or more embodiments, it is described that the lens 261 includes a condensing lens that turns the irradiated light L irradiated from the light source 24 into parallel light before incidence on the measured liquid. However, the present disclosure is not limited thereto. The lens 261 may include another lens having any refractivity instead of a condensing lens. The lens 261 is not limited to being disposed on the light source 24 side and may be disposed on the light receiver 25 side and include any other lens that acts on at least one among the transmitted light T and the scattered light S.

As described above, in one or more embodiments, it is described that the film 281 includes an ITO film. However, the present disclosure is not limited thereto. The film 281 may include any film that has optical transparency and electrical conductivity and can be formed so as to function as a heater in the optical component 26.

As described above, in one or more embodiments, the heat source 28 may be formed for each optical component 26, these being disposed on both the light source 24 side and the light receiver 25 side. If the measurement precision for the parameters indicating the state of the measured liquid will be maintained, the heat source 28 may be formed for only a portion of the optical components 26. For example, the heat source 28 may be formed for only glass 262 disposed on the light source 24 side such as that illustrated in FIG. 4B.

As described above, in one or more embodiments, it is described that the controller 31 controls the heat source 28 so a current having a predetermined current value constantly flows through the film 281. However, the present disclosure is not limited thereto. For example, the optical measuring device 1 may further have a sensor unit that measures at least one among a temperature and a humidity in an operating environment, and the current flowed through the film 281 may be controlled based on an output from such a sensor unit. For example, the controller 31 may set a threshold for the temperature and the humidity in the operating environment and, based on a comparison with such a threshold, control an on/off state of the current flowed through the film 281 or control an intensity of the current.

As described above, in one or more embodiments, it is described that the processing device 3 is a separate device separated from the optical device 2. However, the present disclosure is not limited thereto. For example, the processing device 3 may be reduced in size and equipped to the optical device 2. That is, the optical device 2 and the processing device 3 may be integrated.

As described above, in one or more embodiments, it is described that the optical measuring device 1 is a turbidimeter. However, the present disclosure is not limited thereto. The optical measuring device 1 may be a colorimeter, and the parameter indicating the state of the measured liquid may be the chromaticity of the measured liquid. By the parameters indicating the state of the measured liquid including the chromaticity of the measured liquid, the optical measuring device 1 can measure the chromaticity of the measured liquid as a colorimeter.

Generally, when light passes through a measured liquid of a certain concentration, a relationship such as $t = P_t/P_0 = 10^{-\varepsilon Cl}$ is established between a quantity of incident light and a quantity of transmitted light. Here, t indicates transmittance, Po indicates the quantity of incident light, $P_t$ indicates the quantity of transmitted light, l indicates a distance of a substance in an optical-axis direction, C indicates a substance concentration, and $\varepsilon$ indicates an extinction coefficient. Moreover, a logarithm of the transmittance t is referred to as an absorbance A, which is represented as $A = -\log t = \varepsilon Cl$. If the distance l of the substance in the optical-axis direction is constant, the absorbance A is proportional to the concentration C of the substance—that is, a chromaticity. Therefore, the chromaticity of the measured liquid can be found by measuring the absorbance A.

| | |
|---|---|
| 1 | Optical measuring device |
| 2 | Optical device |
| 21 | Measured-liquid inlet |
| 22 | Measured-liquid outlet |
| 23 | Main-body unit |
| 24 | Light source |
| 25 | Light receiver |
| 251 | Transmitted-light detector |
| 252 | Scattered-light detector |
| 26 | Optical component |
| 261 | Lens |
| 262 | Glass |
| 262a | First glass |
| 262b | Second glass |
| 27 | Liquid tank |
| 28 | Heat source |
| 281 | Film |
| 282 | Wiring |
| 3 | Processing device |
| 31 | Controller |
| 32 | Storage |
| 33 | Input unit |
| 34 | Output unit |
| 35 | Communication unit |
| L | Irradiated light |
| ML | Measured light |
| S | Scattered light |
| T | Transmitted light |

**Claims**

1. An optical measuring device (1) for measuring one or more optical parameters of a liquid, the optical measuring device (1) comprising:

   a light source (24) configured to irradiate light to the liquid;
   a light receiver (25) configured to detect a measured light (ML) based on the light irradiated to the liquid;
   an optical component (26) disposed on an optical path between the light source (24) and the light receiver (25); and
   a heat source (28) disposed on the optical component (26) and having optical transparency and electrical conductivity.

2. The optical measuring device (1) according to claim 1, further comprising a liquid tank (27) configured to contain the liquid, wherein

   the optical component (26) comprises glass (262) disposed at a boundary of the liquid tank (27), and
   the heat source (28) comprises a film (281) formed on a surface of the glass (262).

3. The optical measuring device (1) according to claim 2, wherein the glass (262) is T-shaped.

4. The optical measuring device (1) according to any one of claims 1-3, wherein

   the optical component (26) comprises a lens (261), and
   the heat source (28) comprises a film (281) formed on a surface of the lens (261).

5. The optical measuring device (1) according to claim 4, further comprising a liquid tank (27) configured to contain the liquid, wherein the lens (261) is disposed at a boundary of the liquid tank (27), optionally separated from the liquid tank (27).

6. The optical measuring device (1) according to any one of claims 2-5, wherein the film (281) comprises an indium tin oxide (ITO) film.

7. The optical measuring device (1) according to any one of claims 1-6, wherein

> the optical component (26) comprises a first optical component disposed on a light-source side and a second optical component disposed on a light receiver side, and
> the heat source (28) comprises a first heat source disposed on the first optical component (26) and a second heat source disposed on the second optical component.

8. The optical measuring device (1) according to any one of claims 1-7, wherein one of the one or more optical parameters is turbidity of the liquid.

9. The optical measuring device according to any one of claims 1-8, wherein one of the one or more optical parameters is chromaticity of the liquid.

FIG. 1

FIG. 2

FIG. 3

FIG. 4A

FIG. 4B

FIG. 5A

FIG. 5B

FIG. 6

EP 3 933 382 A1

FIG. 7

EP 3 933 382 A1

FIG. 8

Europäisches
Patentamt

European
Patent Office

Office européen
des brevets

# EUROPEAN SEARCH REPORT

**Application Number**

EP 21 18 2771

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JOHNSON M ET AL: "A NON-FOULING OPTICAL INTERFACE FOR ENVIRONMENTAL MEASUREMENTS", MEASUREMENT SCIENCE AND TECHNOLOGY, IOP, BRISTOL, GB, vol. 9, no. 3, 1 March 1998 (1998-03-01), pages 399-408, XP000777474, ISSN: 0957-0233, DOI: 10.1088/0957-0233/9/3/013 * page 399, left-hand column, lines 29-31 * * Section 2.2. Deep-immersion measurements * * figures 1,5 * | 1-9 | INV. G01N21/15 |
| X | WO 2014/188891 A1 (AZBIL CORP [JP]) 27 November 2014 (2014-11-27) * paragraphs [0026] - [0032], [0040] - [0043], [0059] - [0065]; figures 1,4 * | 1-9 | |
| X | US 2003/006223 A1 (DAVIS RAYMOND G [US]) 9 January 2003 (2003-01-09) * abstract; figure 3 * * paragraphs [0016] - [0021], [0023], [0038], [0063] * | 1-9 | |

**TECHNICAL FIELDS SEARCHED (IPC)**

G01N

The present search report has been drawn up for all claims

| Place of search | Date of completion of the search | Examiner |
|---|---|---|
| Munich | 25 October 2021 | Passier, Martinus |

EPO FORM 1503 03.82 (P04C01)

**ANNEX TO THE EUROPEAN SEARCH REPORT
ON EUROPEAN PATENT APPLICATION NO.**                        EP 21 18 2771

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2021

| Patent document cited in search report | | Publication date | Patent family member(s) | | Publication date |
|---|---|---|---|---|---|
| WO 2014188891 | A1 | 27-11-2014 | JP | 6091331 B2 | 08-03-2017 |
| | | | JP | 2014228493 A | 08-12-2014 |
| | | | WO | 2014188891 A1 | 27-11-2014 |
| US 2003006223 | A1 | 09-01-2003 | DE | 60213231 T2 | 14-06-2007 |
| | | | EP | 1395177 A1 | 10-03-2004 |
| | | | US | 2003006223 A1 | 09-01-2003 |
| | | | WO | 02096290 A1 | 05-12-2002 |

EPO FORM P0459

For more details about this annex : see Official Journal of the European Patent Office, No. 12/82

**EP 3 933 382 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006329629 A